# EUROPEAN PATENT SPECIFICATION

(11) **EP 0 998 813 B1**
(45) Date of publication and mention of the grant of the patent: **02.07.2003**
(21) Application number: 98933846.2
(22) Date of filing: 23.07.1998
(51) Int. Cl.: H04N 5/00

(54) **DIGITAL TRANSPORT STREAM PROCESSING**
VERARBEITUNG EINES DIGITALEN TRANSPORTSTROMES
TRAITEMENT D'UN FLUX DE TRANSPORT DE DONNEES NUMERIQUES

(30) Priority: 24.07.1997 EP 97401792
(43) Date of publication of application: 10.05.2000
(73) Proprietor: Canal+ Technologies, 75015 Paris (FR)
(72) Inventor: SARFATI, Jean-Claude, F-93800 Epinay sur Seine (FR); MERIC, Jérôme, F-60300 Senlis (FR)
(74) Representative: Santarelli
(86) International application number: IB9801173
(87) International publication number: WO99005854

(56) References cited:
- EP-A- 0 679 028
- EP-A- 0 714 213
- EP-A- 0 735 776
- EP-A- 0 743 795
- EP-A- 0 743 796
- EP-A- 0 749 244
- EP-A- 0 781 002
- EP-A- 0 782 332
- EP-A- 0 784 401
- EP-A- 0 823 798
- US-A- 5 533 021
- RATH K ET AL: "SET-TOP BOX CONTROL SOFTWARE: A KEY COMPONENT IN DIGITAL VIDEO" PHILIPS JOURNAL OF RESEARCH, vol. 50, no. 1/02, July 1996, pages 185-199, XP000627669
- BUNGUM O W: "TRANSMULTIPLEXING, TRANSCONTROL AND TRANSSCRAMBLING OF MPEG-2/DVB SIGNAL" INTERNATIONAL BROADCASTING CONVENTION, 12 September 1996, pages 288-293, XP002040478
- WILLIAMS T: "STB OPERATING SYSTEMS GEAR UP FOR FLOOD OF DATA SERVICES" COMPUTER DESIGN, vol. 35, no. 2, 1 February 1996, pages 67/68, 72, 74-76, 78, 80, XP000555483
- HARTWIG S: "SOFTWAREARCHITEKTUREN FUER INTERAKTIVE DIGITALE DECODER" FERNSEH UND KINOTECHNIK, vol. 50, no. 3, 1 March 1996, pages 92-94, 96 - 98, 100 - 102, XP000581418

## Description

The present invention relates to interfacing of application programs to physical devices, particularly but not exclusively in the context of receiver/decoders for digital television systems.

The advent of digital transmission systems has opened up the possibility of using such systems for other purposes. One of these is to provide interactivity with the end user. As used herein, the term "digital transmission system" includes any transmission system for transmitting or broadcasting for example primarily audiovisual or multimedia digital data. Whilst the present invention is particularly applicable to a broadcast digital television system, the invention may also be applicable to a fixed telecommunications network for multimedia internet applications, to a closed circuit television, and so on. As used herein, the term "digital television system" includes for example any satellite, terrestrial, cable and other system.

The present invention finds specific application in a broadcast digital television system in which received signals are passed through a receiver to a receiver/decoder and thence to a television set. The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

The receiver/decoder decodes a compressed MPEG-type signal into a television signal for the television set. It is controlled by a remote controller handset, through an interface in the receiver/decoder, also known as a set-top box or STB. The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term includes all variants, modifications or developments of MPEG formats applicable to the field of digital data transmission.

One way of providing the interactivity described above is to run an application on the receiver/decoder through which the television signal is received. It is desirable to enable a variety of applications to communicate with a variety of physical devices in a transparent manner. Our co-pending applications PCT/EP97/02115 and PCT/EP97/02116 describe systems in which one or more applications can be downloaded by a receiver/decoder and communicate with physical devices in the receiver/decoder such as parallel and serial interfaces and smartcard readers by means of a device driver for each device and an overall device manager. As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices such as are often used in TV decoder systems.

Pursuant to the present invention, it has been proposed to provide the capability for a set-top box to provide a digital output stream from a received data stream, for example to enable digital storage of received programmes and data, for example using a digital video recorder, or to facilitate data communication with other devices, for example over a TCP/IP network.

A problem with providing such a digital output stream is that the received data stream generally contains MPEG data at a very high bit rate, and it would be impractical to store the complete received data stream. In addition, the received data stream may contain much information which is not of interest to the viewer. A receiver/decoder contains apparatus for demultiplexing and if necessary descrambling a portion of the received data stream to provide a single channel for analogue display which can be recorded via a conventional analogue video recorder. However, the conventional apparatus lacks flexibility and cannot provide a data stream suited for digital storage.

Bungum O W: "Transmultiplexing, Transcontrol and Transscrambling of MPEG-2/DVB Signal", International Broadcasting convention, 12 September 1996, pages 288-293 describes the multiplexing of several transport streams from different media into one transport stream in which filtering is conducted to keep the output rate below the limit of the transport stream. The filtering is conducted by removing one or several PIDs in one or several of the transport streams.

EP-A-0 679 028 describes apparatus for selectively extracting desired payloads of program component data and coupling this data to a common buffer memory data input port. A microprocessor couples also data to the common buffer memory data input port. The respective component payloads and data generated by the microprocessor are stored in respective blocks of the common buffer memory in response to associated memory address which are applied to a memory address input port by an address multiplexer.

EP-A-0 781 002 describes a method for optimizing the operation of a packet transport system generating a packet stream carrying a plurality of component signals. The packet stream is partitioned into successive groups, each group containing a predetermined number of packet slots. A plurality of lists are maintained, one associated with each packet slot in a group. A packet stream is generated by placing data representing a component signal selected in response to entries in the list associated with that packet slot into the packet slot.

Aspects of the invention propose novel techniques for providing a digital data stream suited to storage on a digital video recorder. Although the invention offers most advantages in processing an MPEG data stream containing a number of television programmes and other data received by a receiver/decoder (for cable or more preferably satellite) to produce an output stream suitable for transmission to a digital video recorder, it has been appreciated by the inventors that the invention can be applied to processing of other data streams, and can provide real-time editing of digital video.

In a first aspect, the invention provides apparatus for processing a digital data stream comprising:
means for receiving a digital data stream comprising a plurality of packets of information, each packet having a packet identifier common to one or more packets;
means for storing a list of specified packets to be selected from the received digital data stream, said list including priority information indicating a priority assigned to each packet identifier;
means for extracting packets specified in said list from the received data stream; and
processing means for processing the extracted packets to produce an output data stream, and for reducing selectively the number of extracted packets in the output data stream by including extracted packets with higher priority in the output data stream in preference to extracted packets with lower priority.

This aspect of the present invention extends to a method of processing a digital data stream comprising:
receiving a digital data stream comprising a plurality of packets of information, each packet having a packet identifier common to one or more packets;
storing a list of specified packets to be selected from the received digital data stream, said list including priority information indicating a priority assigned to each packet identifier;
extracting packets specified in said list from the received data stream;
processing the extracted packets to produce an output data stream; and
reducing selectively the number of extracted packets in the output data stream by including extracted packets with higher priority in the output data stream in preference to extracted packets with lower priority.

Thus, with this aspect of the invention, specified packets can be extracted directly from the received data stream (which may also be termed the original transport stream) and selected portions, for example corresponding to one or more programmes of interest, extracted and compiled into the output data stream (which may also be termed a partial transport stream).

It will be appreciated that the apparatus offers considerable flexibility as it may be employed simply to copy an original transport stream containing data for several channels unchanged, or to select an individual packet of data.

As the list contains priority information indicating priority assigned to each packet, less important information, for example associated with a programme of lesser interest can be discarded, leading to a deterioration in quality of that programme, whilst another programme is more reliably recorded.

In one embodiment, the processing means is adapted to reduce selectively the number of extracted packets in the output data stream in the event of the number of extracted packets to be included becoming too great for the data handling capacity of the output stream. Packets may be excluded for a number of reasons, for example, packets may be excluded in the event that the number of packets is too great for the data handling capacity of a storage medium to which the packets are being output, or the data handling capacity of a device or output port receiving the output data stream.

The processing means may be adapted to selectively reinsert excluded extracted packets into the output data stream, for example, if the data handling capacity of the output data stream increases.

A packet typically comprises a plurality of sections. The means for processing extracted sections can preferably perform one of a number of operations to encapsulate or package received MPEG sections in a suitable format. In a simple embodiment, processing the extracted sections may simply comprise stripping MPEG header information or other data from the sections, for example by deleting portions of the segments, preferably at the beginning or the end, to extract the "raw" data for onward transmission. In such a case, addition of communication protocol specific headers and the like must be performed at the sending end, by sending, for example, ready-prepared TCP/IP packets.

Preferably, the means for processing the extracted sections includes means for adding at least one of a header and a footer, and preferably both, to a received section to provide a data stream conforming to a communication protocol other than the communication protocol of the received data stream. The section processing means may include means for adding a frame check sequence to the data. Inclusion of such features may reduce the amount of processing required at the transmitter, as well as reducing the amount of data that must be transmitted. In addition, the communication protocol can be changed at the receiver/decoder.

In each case, the received digital data stream is preferably an MPEG data stream (by which is meant any variant, modification or development of the basic MPEG format, preferably an MPEG-2 data stream) comprising a series of packets having respective packet identifiers (also termed PIDs).

Particularly (but not exclusively), the list preferably comprises a list of packet identifiers to be selected from the received data stream.

Particularly (but not exclusively), if the list comprises a list of sections, each section may be identified according to a numeric value in a specified field in the section. The section is preferably specified by defining a field of a first predetermined number of bits at an offset of a second predetermined number of bits from an identified point, preferably the start, in the section.

The apparatus may include means for logging the identifiers of sections received. The logging means may comprise means for defining a bitmap, each bit in the bitmap corresponding to a section received or expected to be received, and means for altering the state of the bit corresponding to a received section to signify reception of that section.

The apparatus preferably includes means for storing at least one further list of packet identifiers and applying one or more specified processing operations, for example descrambling, to packets specified in the or each further list prior to inclusion in the output data stream. This allows, for example, a scrambled programme to be descrambled and stored in descrambled form.

The apparatus preferably also includes means for inserting further data, for example packets, into the output data stream. The apparatus is preferably arranged to receive the further data from an application. This enables other information, for example information identifying the programmes included in the output data stream, to be stored, or enables other data generated by an application receiving the original transport stream to be stored.

The apparatus is most preferably implemented as a device in a receiver/decoder, for example for a digital satellite system as described in our co-pending applications PCT/EP97/02106-02117. In such an implementation, the device can operate under the control of an application, via a device manager, providing a convenient and flexible arrangement for controlling the composition of the output data stream. The device is preferably arranged to communicate with a digital video recorder using a high-speed digital interface, such as the IEEE 1394 interface, using a suitable device driver, such as the one described in our European patent application no. 97401793.1, but can be used with any suitable digital interface.

The apparatus may be arranged to provide a virtual TCP/IP connection to a computer, by receiving broadcast MPEG packets and encapsulating the packets to provide a TCP/IP data stream to the computer. In such a case, communication may be via a serial or parallel port, preferably an enhanced or bi-directional parallel port.

The device preferably operates in one of two modes, an idle mode in which no output stream is being produced and a running mode in which data is passing through the device. Although production of the output stream could be stopped simply by specifying no packets for inclusion, provision of an idle mode may allow a more efficient use of system resources. The device preferably also includes means for receiving commands from an application for starting and stopping output stream generation (for switching between modes).

Preferably, in said idle mode, the device is arranged to receive information for compiling said list in the form of an initial list of all packet identifiers to be copied to the output stream. This allows the initial list to be set efficiently. Thereafter, in running mode, the device is preferably arranged to receive a list of packet identifiers to be added to or deleted from the current list. In this way, to update the list, it is not necessary to handle increasingly long lists and to keep track of all previous packet identifiers; this is particularly advantageous as running mode processing may be more time-critical than idle mode processing.

In a similar manner to the initial storing of lists of packet identifiers to be copied in idle mode, and the adding and deleting of entries in running mode, the device is preferably arranged to maintain a further list of packet identifiers to be descrambled, preferably by descrambling means of the receiver/decoder used to descramble programmes for display. In addition, the device may be arranged to receive information for use in descrambling from an application, preferably as part of a procedure for setting the initial list of packet identifiers to be descrambled.

The device preferably further includes means for storing a list of MPEG sections to be inserted by an application. Preferably, the device is arranged to receive parameters from an application for controlling repetition of the section in the output stream and the device is arranged to repeat the section based on the parameters. This allows production of complicated data streams with relatively little input from an application. For example, an application can send a simple command to insert a section identifying the programmes included in the output stream, and this can automatically be inserted at regular intervals into the output stream by the device.

The device preferably includes means for returning to an application information concerning the currently selected packet identifiers included in the output stream.

Functions of the device may be implemented in hardware, for example in a dedicated integrated circuit; this may provide enhanced speed of operation. Preferably, however, at least some of the device driver is implemented in software, preferably run by processing means which runs the application; this allows greater flexibility, requires less components, and allows the device driver to be updated more readily.

In a third aspect the present invention provides a data processing system comprising:
run-time engine means for running at least one application;
means for receiving a broadcast digital data stream;
apparatus, preferably as defined above, for processing the received digital data stream under the control of the or each application; and
means for supplying the data stream output by the apparatus to an output interface.

Preferred features of the first and second aspects may be applied to the third aspect.

The data processing system is preferably implemented in a receiver/decoder (for example a set-top box) which includes means for receiving the broadcast digital data stream from a satellite receiver or cable, the interface being arranged for connection to a digital video recorder (which term is meant to include any suitably configured digital storage device capable of storing data for a television program, regardless of the physical medium in which the data is actually stored) or digital display device or computer for display or storage of at least a portion of the received data. The device is preferably arranged to cooperate with a device driver for outputting the output data stream to a high-speed (100Kbit/s upwards, preferably at least 1Mbit/s, 10Mbit/s or higher) digital interface.

The interface preferably conforms to the IEEE 1394 standard or a variant or modification thereof.

Where the system is implemented in a receiver/decoder arranged for connection to a digital video recorder, the receiver/decoder preferably includes an application arranged to control the device to select portions (packets or sections) of the received data stream comprising two or more television programmes for outputting to the digital video recorder and preferably including means for adding information to the output data stream identifying the programmes. In this way, a user may select two or more programmes for recording, for viewing at a later time; this would conventionally require two or more analogue video recorders and two or more receiver/decoders. The application may include means for controlling the video recorder, for example as described in our European patent application no. 97401793.1, the disclosure of which is herein incorporated by reference.

Embodiments incorporating preferred features of the present invention will now be described, purely by way of example, with reference to the accompanying drawings, in which:-
Figure 1 is a schematic diagram of interfaces of the receiver/decoder;
Figure 2 is a functional block diagram of the receiver/decoder;
Figure 3 shows certain components of the virtual machine and run time engine in more detail;
Figure 4 shows a schematic overview of the functions provided by a first device embodying the invention;
Figure 5 is a schematic diagram for explaining the insertion of repeated sections into the output data stream;
Figure 6 is a schematic overview of the functions provided by a second device embodying the invention;
Figure 7 is a schematic diagram of a datagram produced by the embodiment of Fig. 6;
Figure 8 illustrates a list of PIDs which should be copied directly from an input data stream to an output data stream; and
Figure 9 illustrates a list of PIDs which should be descrambled before being copied from the input data stream to the output data stream.

### RECEIVER/DECODER BASICS

To assist in understanding of the device, the preferred platform on which the device operates, our digital satellite receiver/decoder will first be described briefly.

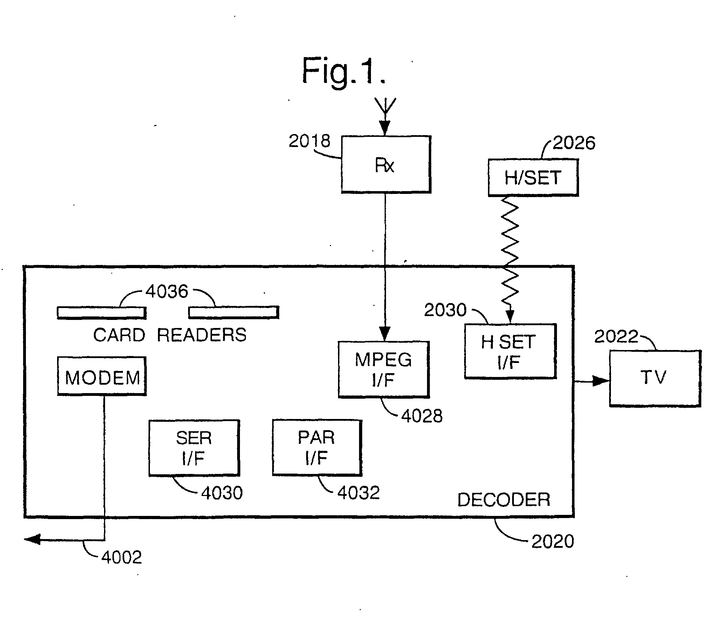

Referring to Fig. 1, a receiver/decoder 2020 or set-top box for use in a digital interactive television system in which the device driver of the embodiment is intended to be installed is schematically depicted. Details of a suitable digital interactive television system may be found in our co-pending applications PCT/EP97/02106-02117 to which reference should be made, and the disclosures of which are herein incorporated by reference. For ease of reference, parts described in more detail in the aforementioned specifications are generally designated by the reference numerals used in those specifications.

As described in more detail in the aforementioned specifications, referring to Figure 1, the receiver/decoder 2020 includes several interfaces; specifically, a tuner 4028 for the MPEG signal flow, a serial interface 4030, a parallel interface 4032, and two card readers 4036, one for a smartcard forming part of the system and one for bank cards (used for making payments, home banking, etc) or another smartcard. The receiver/decoder also includes an interface 4034 to a modemmed back channel 4002 to the television signal producer, so that the user can indicate preferences, etc back to the television signal (programme) producer. The receiver also comprises a Run-Time-Engine 4008, a Device Manager 4068 and a plurality of Devices 4062 for running one or more applications 4056.

For the purposes of this specification, an application is a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Some examples of applications, described in more detail in the aforementioned applications are: -
- An Initiating Application which is an adaptable collection of modules enabling the receiver/decoder 2020 to be immediately operative in the MPEG-2 environment.
- A Startup Application which allows any application, either downloaded or resident, to run on the receiver/decoder 2020.
- A Program Guide which is an interactive application which gives full information about programming.
- A Pay Per View application which is an interactive service available on each PPV channel of the digital TV bouquet to enable the end user to buy the current event.
- A PC Download application enabling an end user to download computer software using the PC download application.
- A Magazine Browser application comprising a cyclic video broadcast of images with end user navigation via on-screen buttons.
- A Teleshopping application enabling offers of goods for sale to be transmitted to the receiver/decoder 2020 and displayed on the television 2022 and enabling the user to select a particular item to buy.

Applications are stored in memory locations in the receiver/decoder 2020 and represented as resource files. The resource files comprise graphic object description unit files, variables block unit files, instruction sequence files, application files and data files, as described in more detail in the above mentioned specifications.

In the MPEG data stream, each module comprises a group of MPEG tables. Each MPEG table may be formatted as a number of sections. In the MPEG data stream, each section has a "size" of up to 4 kbytes. For data transfer via the serial and parallel port, for example, modules similarly are split into tables and sections, the size of the section varying with the transport medium.

Modules arc transported in the MPEG data stream in the form of data packets of typically 188 bytes within respective types of data stream, for example, video data streams, audio data streams and teletext data streams. Each packet is preceded by a Packet Identifier (PID) of 13 bits, one PID for every packet transported in the MPEG data stream. A programme map table (PMT table) contains a list of the different data streams and defines the contents of each data stream according to the respective PID. A PID may alert a device to the presence of applications in the data stream, the PID being identified using the PMT table.

The decoder contains memory divided into a RAM volume, a FLASH volume and a ROM volume, but this physical organization is distinct from the logical organization.

The memory may further be divided into memory volumes associated with the various interfaces. From one point of view, the memory can be regarded as part of the hardware; from another point of view, the memory can be regarded as supporting or containing the whole of the system shown apart from the hardware.

The system can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061. The receiver/decoder hardware can be regarded as including the various ports or interfaces as discussed above (the interface 2030 for the handset 2026, the MPEG stream interface 4028, the serial interface 4030, the parallel interface 4032, the interfaces to the card readers 4036, and the interface 4034 to the modemmed back channel 4002).

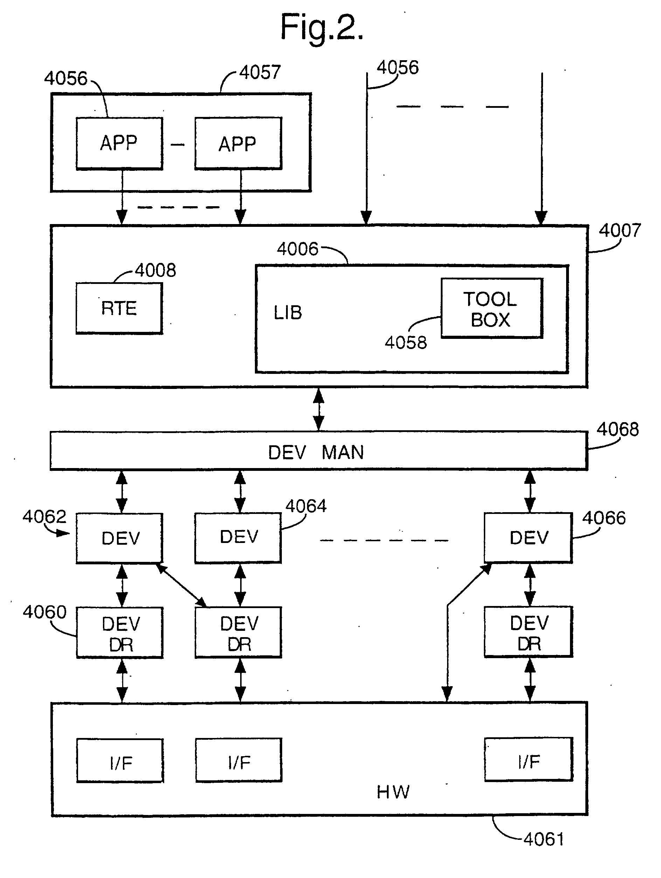

With reference to Figure 2, various applications 4056 are coupled to the unit 4007; some of the more commonly used applications may be more or less permanently resident in the system, as indicated at 4057, while others will be downloaded into the system, eg from the MPEG data stream or from other ports as required.

The unit 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware 4060 in the receiver/decoder 2020, such as hardware and software version numbers and available RAM space, and a function used when downloading a new device 4062. Functions can be downloaded into the library, being stored in Flash or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

As will be described below, there arc 3 forms of communication from the devices 4064 up to the run time engine: by means of variables, buffers, and events which are passed to a set of event queues.

Each function of the receiver/decoder 2020 is represented as a device 4062. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

When a new device 4062 is created, it can be installed in existing receiver/decoders 2020 by downloading the relevant application 4056 from the broadcast centre. This downloading is performed in the receiver/decoder 2020 by an application 4056 which checks the hardware and software versions and, if correct, loads the software module representing the new device 4062 and asks a procedure of the library 4006 to install the new device code within the firmware (in Flash memory). This can provide a flexible and secure installation of new functions within the receiver/decoder 2020 without affecting the rest of the software.

The device manager 4068 is a common software interface between the application 4056 and the specific functions of the receiver/decoder 2020. The device manager 4068 controls access to devices 4062, declares receipt of an unexpected event, and manages shared memory.

The run time engine 4008 runs under the control of the microprocessor and a common application programming interface. They are installed in every receiver/decoder 2020 so that all receiver/decoders 2020 are identical from the application point of view.

The engine 4008 runs applications 4056 on the receiver/decoder 2020. It executes interactive applications 4056 and receives events from outside the receiver/decoder 2020, displays graphics and text, calls devices for services and uses functions of the library 4006 connected to the engine 4008 for specific computation.

The run time engine 4008 is an executable code installed in each receiver/decoder 2020, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory 2028. Only the necessary code is loaded into the RAM or Flash memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG-2 transport stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4062 or the device manager 4068. The manager gives the client a client number which is referred to in all accesses to the device. A device 4062 can have several clients, the number of clients for each device 4062 being specified depending on the type of device 4062. A client is introduced to the device 4062 by a procedure "Device: Open Channel". This procedure assigns a client number to the client. A client can be taken out of the device manager 4068 client list by a procedure "Device: Close Channel".

The access to devices 4062 provided by the device manager 4068 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requcsted result is available, an event is put in the queue of the engine to signal its arrival. A further procedure "Device: Event" provides a means of managing unexpected events.

As noted above, the main loop of the run time engine is coupled to a variety of process sequencer units, and when the main loop encounters an appropriate event, control is temporarily transferred to one of the process sequencer units.

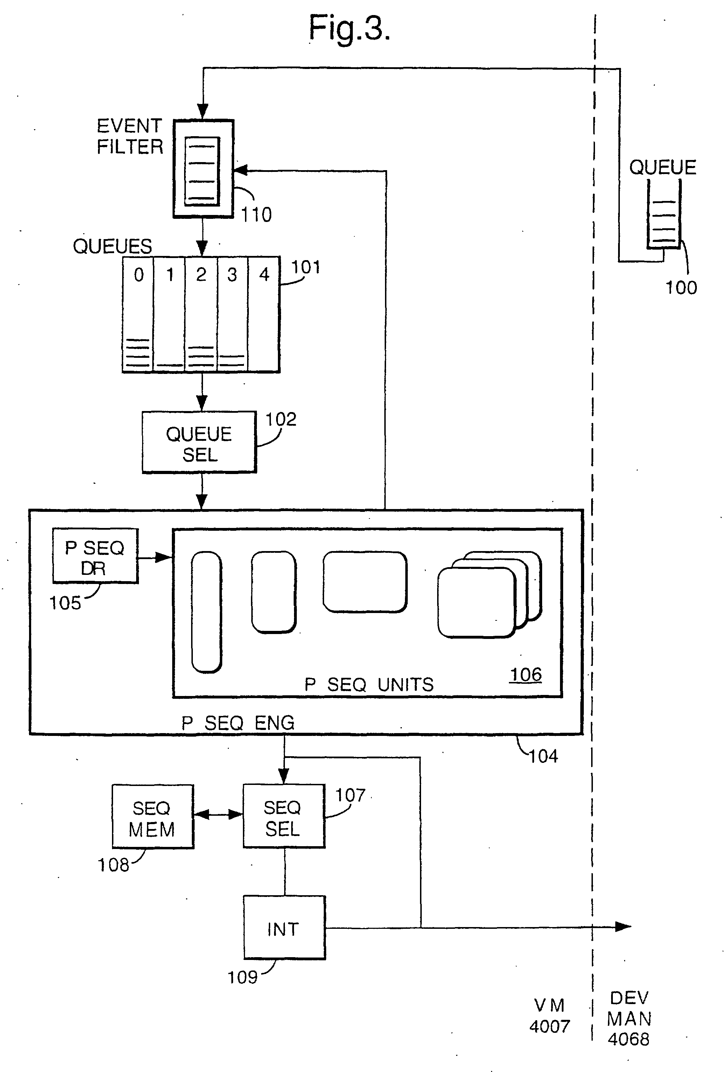

Referring to Fig. 3, the device manager includes a queue 100 into which events from the devices are passed for temporary storage. At suitable intervals, the virtual machine sends a signal to this queue to extract the first item from it. This event item is moved to a queue structure 101 in the virtual machine. Depending on the priority level of the event item, it is inserted into the appropriate one of the 5 queues 0 to 4. Event items are extracted from the queue structure 101 by a queue selector unit 102 under the control of the run time engine.

When an event is selected from the queue structure 101, it is passed to a process sequencer unit engine 104, which consists of a process sequencer unit driver 105 and a set of process sequencer units 106. Each process sequencer unit is a set of action-groups linked together, so that each step from one action-group to the next action-group is, in general, dependent on the current action-group and the nature of the event. Different process sequencer units have different sizes and complexities, including one in which the "next" action-group, ie the action-group to which the system steps on in response to an event, is dependent solely on the nature of the event but is independent of the current action-group. Also, as is shown at the right-hand side of the process sequencer units block, there may be several copies of a process sequencer unit, ie several identical process sequencer units, to deal eg with several separate data streams using identical protocols through a single port.

When an event is selected, it is passed to the appropriate process sequencer unit. This selects the appropriate outlet from the current action-group on the process sequencer unit. This results in the appropriate next action-group being selected and the actions in that action-group being performed, involving eg the sending of a message to the device manager or the execution of a instruction sequence. Action-groups in the process sequencer unit can also send event messages to other process sequencer units.

If a instruction sequence is selected, the identification of the instruction sequence is sent to a instruction sequence selector 107. This obtains the desired instruction sequence from a instruction sequence memory 108 and passes it to a instruction sequence interpreter 109, which executes the instruction sequence.

The system also includes a filter 110, which is loaded with event types eg from the process sequencer units 106. When an event item is passed from the queue 100 in the device manager to the queue structure 101 in the virtual machine, its type or character is matched against the list in the filter 110, and if it is of a type which is not recognized, it is rejected. This ensures that if say the device manager or the keyboard generates events of a type which the virtual machine cannot deal with, those events are not passed to the queue structure 101. (If events of this kind were passed to the queue structure 101, either they would accumulate in that queue structure or they might cause malfunctioning of the process sequencer unit engine 104.)

Thus, it can be seen that our basic system provides a platform having considerable flexibility in enabling an application to communicate with a variety of devices.

### SIGNAL PROCESSING DEVICES

Two signal processing devices which embody the invention will be described; the two devices may both be provided simultaneously in the same receiver/decoder, each device being tailored to provide slightly different functions.

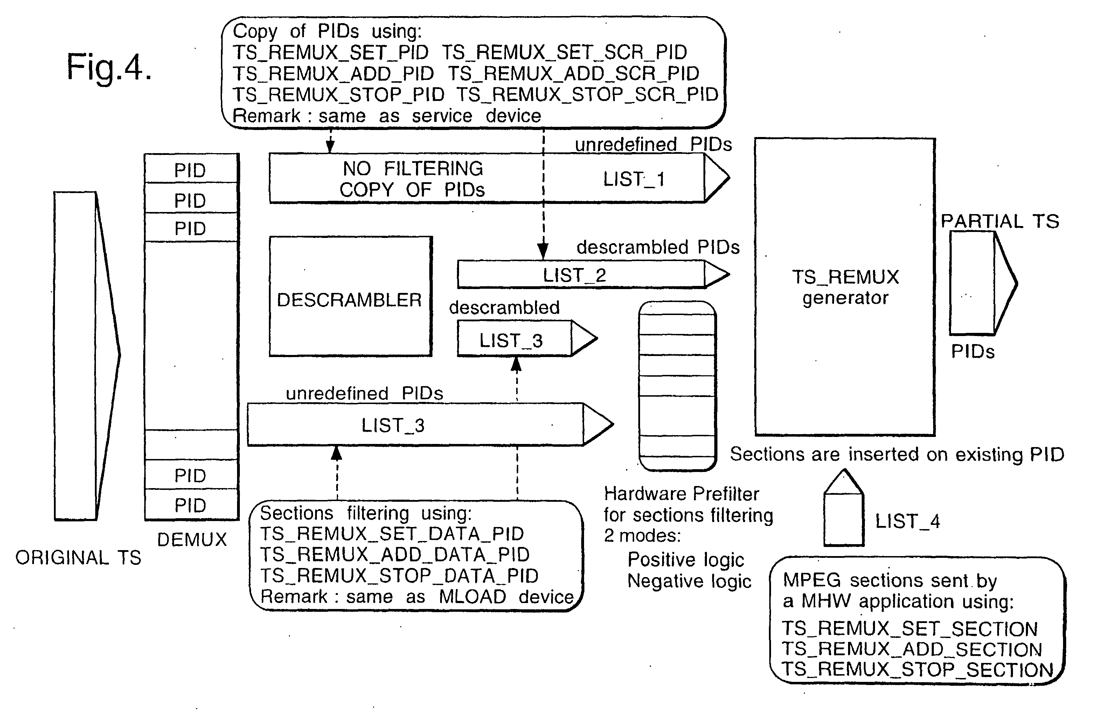

A first signal processing device which remultiplexes a demultiplexed received transport stream to produce an output partial transport stream, typically containing some but not all of the information in the original transport stream, and possibly additional information will now be described, with reference to Fig. 4. For ease of reference, the device will be referred to below as a TS_REMUX device (abbreviation for Transport Stream RE-MUltipleXer).

### TS REMUX DEVICE

The Ts_Remux device can be considered as comprising a number of functional units, hereinafter termed commands. In addition, as will be appreciated, the device contains underlying functionality for actually implementing the functions performed by the various commands. For example, actual selection of packets from the received data stream may be implemented by means of dedicated hardware which filters the data to extract packets corresponding to defined packet identifiers, the list of packet identifers being supplied under software control based on information supplied by an application via one of the commands described below. In the following discussion,it should be noted that upper and lower case versions of a command name are both intended to refer to the same command.

The precise details of the implementation of the various functions, and the distribution between hardware and software are a matter of choice for the implementor and will not be described in detail. It is, however, noted that dedicated integrated circuits capable of performing filtering operations on an MPEG data stream are commercially available, and these can be used as the basis for a hardware accelerator, or more preferably modified to produce a dedicated hardware accelerator, to implement various of the packet selecting operations required, thereby reducing the processing power required to run the software. However, the operations required may be implemented in software if sufficient processing power is available.

The device is arranged to operate in one of two modes, an idle mode in which no output is being produced and a running mode in which data is being conveyed to the output data stream. In the running mode, as will be appreciated, more system resources are required by the device. The operation of the commands described below may be dependent on the mode of operation, and, in particular, most commands will only operate in only one mode, and return an error if accessed in the other mode.

Each command interfaces with an application under the control of the device manager 4068 by means of one of the three standard procedures mentioned above, which are common to other devices. Information may be passed between an application and the device by means of parameter tables. For ease of reference, the three basic procedures are summarised briefly below:-
1) Device: Call. This command can be used by an application for performing synchronous commands or data transfer. Execution of the application is suspended until control is returned when the operation by the device driver has completed; this allows operations which must be performed in strict sequence to be controlled reliably.
2) Device: I/O. This command allows asynchronous operation. That is, an application can send a request for a data transfer or a particular function to be performed by the device driver and execution of the application can continue while the data transfer or function is performed by the device driver.
3) Device: Event. The event trapping function enables events to be signalled by the device to an application, and for particular action to be taken by the application in response to the event independently of the code the application is executing at the time the event is signalled; effectively the application is interrupted. Events may be prioritised. Events may be used to signal events occurring on the interface, such as a bus reset, or to provide monitoring of asynchronous commands, for example by signalling completion of a requested data transfer.

The commands provided in a device embodying the invention will now be described. Each command may be accessed by an application by passing an identifier of the command as a parameter via one of the above three standard procedures. Not all of the commands described below need be provided, and the functions of the commands may be altered. Although the commands may be independently provided or altered, as will be appreciated, certain synergistic benefits accrue from the combined functionality provided by the commands described.

The commands will be described in terms of the features and functions provided by each command, together with optional and preferable features. With the information given and specifications provided, actual implementation of these features should be straightforward for one skilled in the art, and the precise details are left to the implementor. As an example, each command could be implemented in software, preferably written in the C programming language and preferably compiled to run on the processor used to run the application; however the device driver may be run on a separate processor, and some or all commands may be implemented by dedicated hardware. The Call and IO commands may signal information or pass parameters back to an application by setting values in a parameter table stored in memory whose address is passed to the device.

### Command: TS REMUX SET PID

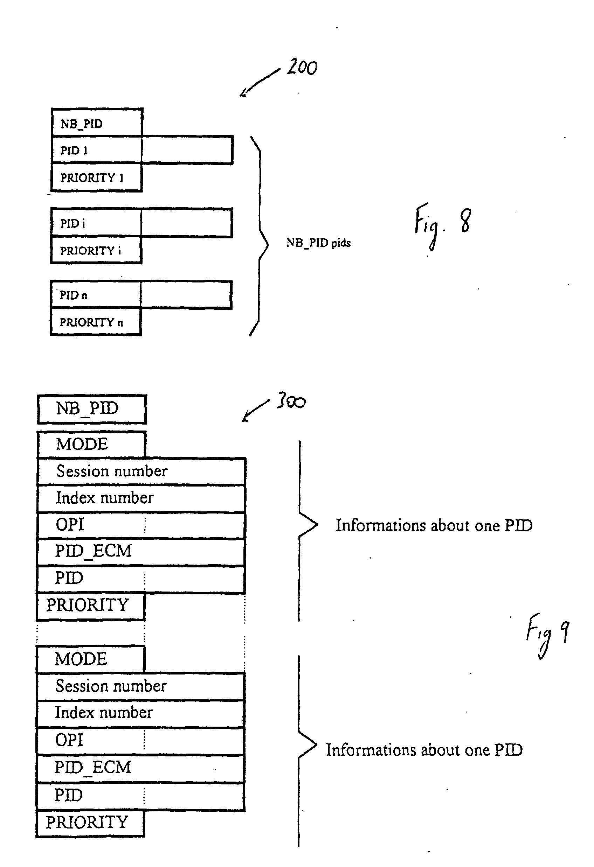

This command operates only in the idle mode. With reference to Figure 8, the command is arranged to receive an initial list of packet identifiers (PIDs) 200. The list 200 contains the number of PIDs (NB_PID) which are to be copied from the input transport stream, the value of each PID (PID) to be copied from the input data stream to the output data stream, and the priority value (PRIORITY) assigned to each PID. The priority value is preferably a single byte ranging from a value of 0 to 255, O indicating the lowest level of priority and 255 indicating the highest level of priority.

It is possible that the bitrate capacity of the output data stream is lower than the bitrate of a data stream including all of the listed packets which are to be copied from the input data stream. If so, the packets having PIDs with the lowest priority value are excluded in turn from the output data stream until the bitrate of the data stream is reduced to a level which is equal to or lower than the bitrate capacity of the output data stream.

If packets are excluded from the output data stream, the PID(s) of these packets are not deleted from the list 200. Should the bitrate capacity of the output data stream increase so that further packets may be added to the output data stream, then excluded packets with the highest priority are included in turn in the output data stream until the bitrate capacity of the output data stream is reached.

The command is preferably accessed synchronously by means of the Device: Call procedure.

### Command: TS REMUX SET SCR PID

With reference to Figure 9, this command operates similarly to the Set_PID command described above, and is used to specify a list 300 of packet identifiers of packets to be descrambled before inclusion in the output data stream. In addition to a list of packet identifiers (PID) and priorities (PRIORITY), the command receives information necessary for descrambling the packets. This information may include a mode indicator (MODE) specifying the type of processing to be performed on each packet, session number (Session number) and index number (Index number), an operator reference (OPI), the PID of the packet to be descrambled (PID) and the PID of the packet containing the ECM to use in descrambling (PID_ECM).

### Command: TS REMUX SET DATA PID

This command operates similarly to the Set_PID command described above, and is used to specify packet identifiers of MPEG sections from the application to be included in the output data stream.

### Command: TS REMUX SET SECTION

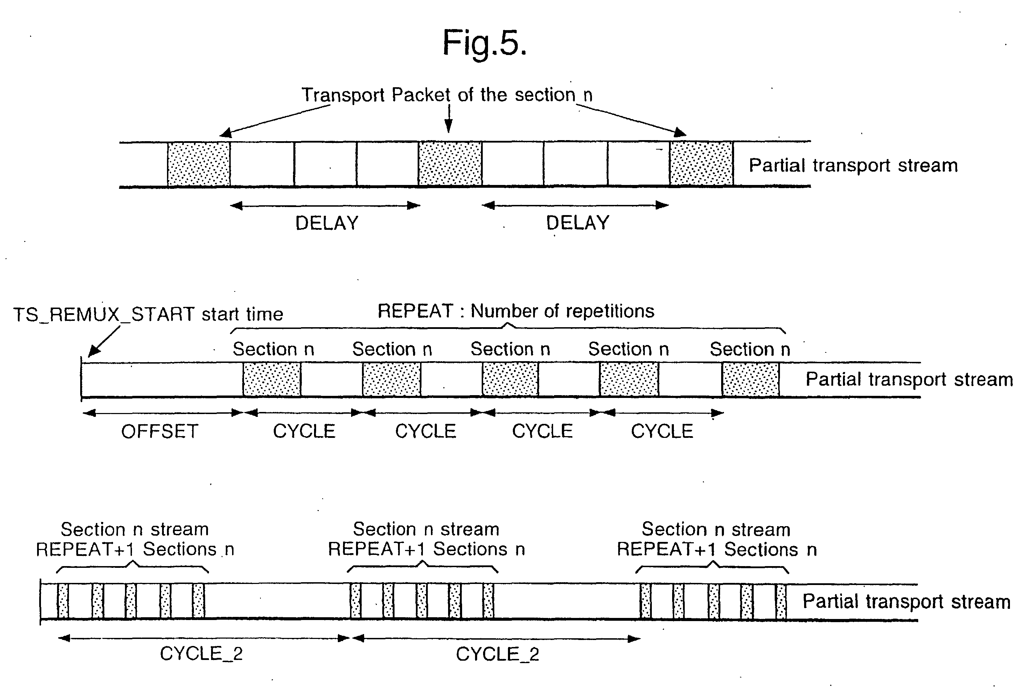

This command operates similarly to the Set_AID command described above, and is used to specify packet identifiers of MPEG sections to be included in the output data stream. In addition, the application can specify a number of parameters including an OFFSET specifying a delay from the start of running mode, a REPEAT parameter specifying the number of times a section is to be repeated, a DELAY between packets of the section, a CYCLE parameter specifying the time from the start of one section to the next repetition of the section and a CYCLE_2 parameter specifying the time from the start of one series of repetitions to the start of the next series of repetitions. The function of these parameters will be understood better with reference to Fig. 5.

### Command: TS REMUX ADD PID

As mentioned above, the Set_PID command only operates in idle mode. In running mode, the Add_PID command enables an application to add PIDs to the current list of PIDs specified for copying to the output stream. The device includes a complementary command Ts_Remux_Stop_PID, which deletes PIDs from the current list. The PIDs are preferably specified in the same manner as for the Set_PID command, including a priority for each command. Because the editing of PIDs in a list may require some time for the list to be updated when the device is in running mode, these commands arc preferably accessed asynchronously via the Device: I/O procedure.

In addition, analogous procedures are provided for dynamically adding to or deleting from the lists of packets to be descrambled, sections to be copied, or sections to be inserted, by means of Ts_Remux_{Add;Stop}_{SCR_PID;Data_PID;Section} commands.

For switching from idle mode to running mode, the command Ts_Remux_Start is provided, and for switching from running mode back to idle mode, command Ts_Remux_Stop is provided. Both of these commands are preferably accessed asynchronously via the Device: I/O procedure.

In addition, for returning information concerning the PIDs, the encrypted PIDs and the sections included in the current output stream, the commands Ts_Remux_PID_Info, Ts_Remux_ECM_Info and Ts_Remux_Info_Section are provided. These return a list of current PIDs in similar format to that supplied by an application using the corresponding Set or Add commands.

In addition to the commands, which allow an application to send commands to the device, the device is arranged to signal certain events to an application, via the device manager's event handling functions. The device implements the following events:-

### Event: EV TS REMUX ECM

This event is used to signal rejection of an ECM by the RSM. The device passes the PID of a packet where the ECM was found and the address of a buffer storing the rejected ECM, together with status words.

### Event: EV TS REMUX GETALL

This event is used to signal the response of the RSM to an application when an ECM is sent to the RSM.

### Event: EV TS REMUX BAD NB

This event signals reception of an ECM with an unexpected session or index number; the ECM is not sent to the RSM.

### Event: EV TS REMUX STREAM

This event is used to signal a change in stream composition, when the priority associated with a PID has been used to control skipping or adding of PIDs in the output stream.

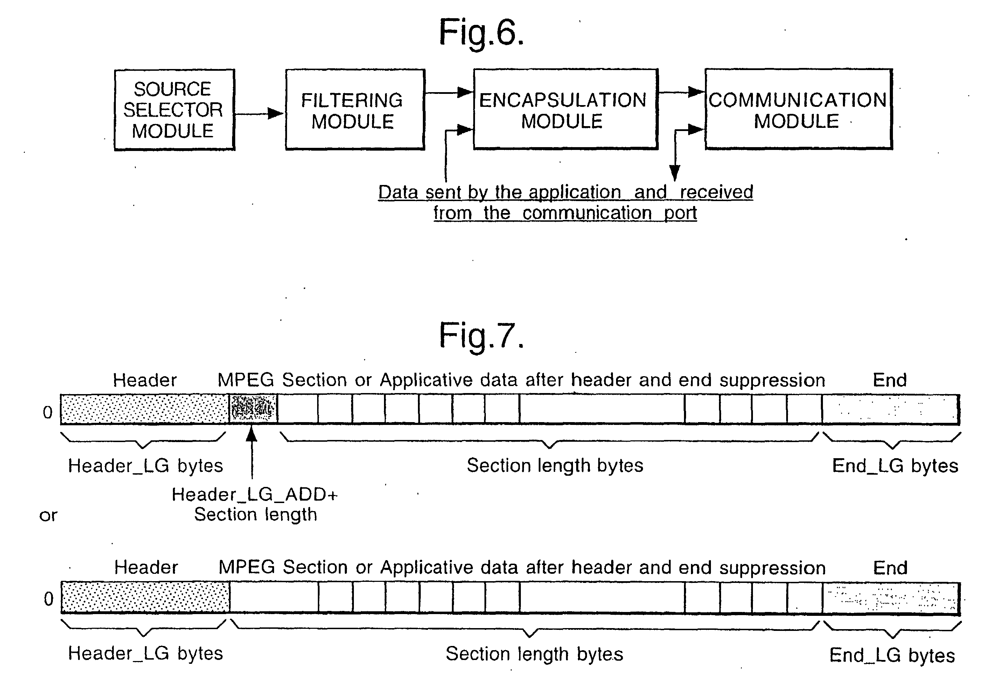

A second device embodying the invention will now be described, with reference to Figs. 6 and 7. This device will be referred to as MCOM (abbreviation for MPEG Communications), and is primarily intended to encapsulate received MPEG sections to provide a virtual TCP/IP data source from a satellite link.

### MCOM DEVICE

This device, like the TS_REMUX device, is composed of a number of commands. Many of the commands perform analogous functions to commands of the TS_REMUX device, so will not be described in detail. Like the TS_REMUX device, the MCOM device preferably operates in either a running mode or an idle mode and has commands for switching between modes. In place of commands for adding and deleting packets from the output data stream, the MCOM device comprises commands for selecting sections to be included, for deleting portions of sections (or, viewed another way, extracting portions of sections to be included) and for altering parameters of the header (if present), footer (if present), and data checking (if present) to be added to received sections (or the portion thereof to be included in the output data stream). The device provides flexibility, by allowing any of a number of communication protocols to be simulatcd with minimal interaction required by an application during running.

The device may be able to operate in an automatic mode, in which, after defining filtering to be performed on the received data, sections are automatically queued to the output until all expected sections have been received. Alternatively, the device may operate in a manual mode in which each section is transferred under the control of the application.

Description of the MCOM device will concentrate on commands which are significantly different from those featured in the TS_REMUX device.

### Command: MCOM INIT COMM

This command is used to configure the communication port, and is CALLed with a buffer containing a port type identifier and specific data for that port. This command is useful because it enables the MCOM device to operate with a variety of communication ports (for example serial, parallel, IEEE 1394) without requiring port-specific information to be used with other commands in the device.

### Command: MCOM INIT FILTER

This command is CALLed to define a numeric field of **n** bits long starting **m** bits from the beginning of an MPEG section at which a section identifier should be found.

The field defined can contain a numeric value c of from 0 to (2^**n** - 1).

Following this command, a bitmap of 2^n bits is defined in memory, each bit corresponding to a section to receive. For example, if n=8, a bitmap of 256 bits (32 bytes) is defined, to flag receipt of 256 separate sections. During receipt of sections from the demultiplexer, the numeric value c of this field is extracted and the (**c** - 1)th bit of the bitmap is tested; if the bit is set, the section is rejected. Thus automatic filtering of sections can be performed, in which a set bit can be used to signify that a section has already been received, or that no corresponding section is to be expected. Of course, the bit may be reset, or receipt of sections flagged in a different way.

The command allows the initial bitmap to be defined; all bits may be set or reset, or a specified bitmap may be set as the initial bitmap.

Corresponding commands are provided for changing the filter dynamically, for example in running mode, or for interrogating the current state of the filter.

The bitmap (or other flag table) may be used to control automatic queuing of packets until all expected sections have been received.

This command is useful in allowing considerable flexibility over the format of MPEG sections that can be processed by the device with automatic filtering.

### Command: MCOM PACKET DEL

This command is CALLed to define portions of an MPEG section to be removed as part of the encapsulation process. For example, a start offset p and an end offset q may be defined, and the MPEG section "top and tailed" by removing p bytes from the start and q bytes from the end.

This command and associated functionality enables the important data to be communicated to be freely placed in the middle of an MPEG section.

### Command: MCOM PACKET HEADER

This command enables a header of a defined format to be added to a received section; the header may include information conforming to a particular communication protocol, for example TCP/IP. This command may operate in one of two modes, a USE HEADER mode in which only the header is added, and a USE_LG_HEADER mode in which the command also adds information concerning the length of the encapsulated packet, for example a defined additive constant plus the length of the section, as illustrated in Fig. 7.

In a similar manner, the device includes a command for adding a frame check sequence, for example a CRC (cyclic redundancy check) of 16 or 32 bits or an LRC on a defined section of the packet, for example starting after a start offset number of bytes and continuing until an end offset number of bytes from the end, with the calculated value inserted immediately after the section checked.

The device may also include a command for translating characters, for example a list of characters to be "escaped" (i.e. substituted by a pair of characters comprising a defined escape character and a defined value).

The above commands and events are merely illustrative, and the invention may be implemented in a variety of ways, and, in particular, some commands may be combined with others which perform similar functions, or some may be omitted in simplified implementations. Hardware and software implementations of each of the functions may be freely mixed, both between commands and within a single command.

It will be readily understood that the functions performed by the hardware, the computer software, and such like are performed on or using electrical and like signals. Software implementations may be stored in ROM or FLASH, or may be patched in FLASH.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. Apparatus for processing a digital data stream comprising:
means for receiving a digital data stream comprising a plurality of packets of information, each packet having a packet identifier common to one or more packets;
means for storing a list of specified packets to be selected from the received digital data stream, said list including priority information indicating a priority assigned to each packet identifier;
means for extracting packets specified in said list from the received data stream; and
processing means for processing the extracted packets to produce an output data stream, and for reducing selectively the number of extracted packets in the output data stream by including extracted packets with higher priority in the output data stream in preference to extracted packets with lower priority.

2. Apparatus according to Claim 1, wherein said processing means is adapted to reduce selectively the number of extracted packets in the output data stream in the event of the number of extracted packets to be included becoming too great for the data handling capacity of the output stream.

3. Apparatus according to Claim 1 or 2, wherein said processing means is adapted selectively to reinsert excluded extracted data packets into the output data stream.

4. Apparatus according to any preceding claim, wherein the packets have one of a multiplicity of priority values.

5. Apparatus according to any preceding claim, wherein the packets have a priority value within the range from 0 to 255.

6. Apparatus according to any preceding claim, wherein the received digital data stream is an MPEG data stream, the list comprising a list of packet identifiers to be selected from the received data stream.

7. Apparatus according to Claim 6 including means for storing at least one further list of packet identifiers and means for applying one or more specified processing operations to packets specified in the or each further list prior to inclusion in the output data stream.

8. Apparatus according to any preceding claim including means for inserting further packets into the output data stream.

9. Apparatus according to any preceding claim wherein the received packets comprise a plurality of data sections and the processing means is arranged to perform at least one of:
cutting a header and/or footer from a received data section; adding a header and/or footer to a received data section; adding an indication of the length of a received section; and adding a frame check sequence.

10. Apparatus according to any preceding claim including means for monitoring receipt of packets of information.

11. Apparatus according to Claim 10 having means for automatically queuing the extracted packets until said monitoring means indicates that all expected packets have been received or until receipt of an instruction to stop from an application.

12. Apparatus according to any preceding claim, wherein the processing means is arranged to produce an output data stream adapted for storage on a digital video recorder.

13. Apparatus according to any of Claims 1 to 11, wherein the processing means is arranged to produce an output data stream adapted for data communication with a computer.

14. Apparatus according to any preceding claim in the form of a device in a receiver/decoder, arranged to operate under the control of an application, via a device manager.

15. Apparatus according to Claim 14, comprising means for receiving from an application information for compiling said list of specified packets.

16. Apparatus according to Claim 15 arranged to operate in one of two modes, the modes comprising an idle mode in which no output stream is being produced and a running mode in which data is passing through the device.

17. Apparatus according to Claim 16 including means for receiving commands from an application for switching between said modes.

18. Apparatus according to Claim 16 or Claim 17 including means operative in said idle mode to receive information for compiling said list in the form of an initial list of packet identifiers to be copied to the output stream.

19. Apparatus according to Claim 16, 17 or 18 including means operative in said running mode to receive a list comprising a list of packet identifiers to be added to or deleted from the current list.

20. Apparatus according to any of Claims 14 to 19 further comprising means arranged to maintain a further list comprising a list of packet identifiers to be descrambled.

21. Apparatus according to Claim 20 arranged to receive information for use in descrambling from an application, preferably as part of a procedure for setting the initial list comprising a list of packet identifiers to be descrambled.

22. Apparatus according to any of Claims 14 to 21 further comprising means for storing a list of MPEG sections to be inserted by an application.

23. Apparatus according to Claim 22 arranged to receive parameters from an application for controlling repetition of the section in the output stream, the device being arranged to repeat the section based on the parameters.

24. Apparatus according to any of Claims 14 to 23 further comprising means for returning to an application information concerning the currently selected packet identifiers included in the output stream.

25. A data processing system comprising:
run-time engine means for running at least one application;
means for receiving a broadcast digital data stream;
apparatus according to any of Claims 14 to 24 for processing the received digital data stream under the control of the or each application; and
means for supplying the data stream output by the apparatus to an output interface.

26. A receiver/decoder comprising a data processing system according to Claim 25, the receiver/decoder including means for receiving the broadcast digital data stream from a satellite receiver or cable and said interface, the interface being arranged for connection to a digital video recorder or digital display device or computer for display or storage of at least a portion of the received data or to provide a communication link to the computer.

27. A receiver/decoder according to Claim 26, wherein the apparatus is arranged to cooperate with a device driver for outputting the output data stream to the interface.

28. A receiver/decoder according to Claim 27 wherein the interface conforms to the IEEE 1394 standard or a variant or modification thereof.

29. A receiver/decoder according to any of Claims 26 to 28 arranged for connection to a digital video recorder, the receiver/decoder including an application arranged to control the apparatus to select portions of the received data stream comprising two or more television programmes for outputting to the digital video recorder and means for adding information to the output data stream identifying the programmes.

30. A method of processing a digital data stream comprising:
receiving a digital data stream comprising a plurality of packets of information, each packet having a packet identifier common to one or more packets;
storing a list of specified packets to be selected from the received digital data stream, said list including priority information indicating a priority assigned to each packet identifier;
extracting packets specified in said list from the received data stream;
processing the extracted packets to produce an output data stream; and
reducing selectively the number of extracted packets in the output data stream by including extracted packets with higher priority in the output data stream in preference to extracted packets with lower priority.

31. A method according to Claim 30, wherein the number of extracted packets in the output data stream is selectively reduced in the event of the number of extracted packets to be included becoming too great for the data handling capacity of the output stream.

32. A method according to Claim 30 or 31, further comprising the step of selectively reinserting excluded extracted data packets into the output data stream.

33. A method according to any of Claims 30 to 32, wherein the packets have one of a multiplicity of priority values.

34. A method according to any of Claims 30 to 33, wherein the packets have a priority value within the range from 0 to 255.

35. A method according to any of Claims 30 to 34, wherein the received digital data stream is an MPEG data stream, the list comprising a list of packet identifiers to be selected from the received data stream.

36. A method according to Claim 35, further comprising the steps of storing at least one further list of packet identifiers, and applying one or more specified processing operations to packets specified in the or each further list prior to inclusion in the output data stream.

37. A method according to any of Claims 30 to 36 further comprising the step of inserting further packets into the output data stream.

38. A method according to any of Claims 30 to 37, wherein the received packets comprise a plurality of data sections and the processing step comprises at least one of: cutting a header and/or footer from a received data section; adding a header and/or footer to a received data section; adding an indication of the length of a received section; and adding a frame check sequence.

39. A method according to any of Claims 30 to 38, further comprising the step of monitoring receipt of packets of information.

40. A method according to Claim 39, further comprising the step of automatically queuing the extracted packets until all expected packets have been received or until receipt of an instruction to stop from an application.

41. A method according to any of Claims 30 to 40, producing an output data stream adapted for storage on a digital video recorder.

42. A method according to any of Claims 30 to 40, producing an output data stream adapted for data communication with a computer.

## Patentansprüche

1. Vorrichtung zur Verarbeitung eines digitalen Datenstroms, mit:
einer Einrichtung zum Empfangen eines digitalen Datenstroms mit einer Vielzahl von Paketen von Informationen, wobei jedes Paket eine einem Paket oder mehreren Paketen gemeine Paketidentifizierung aufweist;
einer Einrichtung zum Speichern einer Liste von aus dem empfangenen digitalen Datenstrom auszuwählenden 'bestimmten Paketen, wobei die Liste eine jeder Paketidentifizierung zugewiesene Priorität angebende Prioritätsinformationen umfaßt;
einer Einrichtung zum Extrahieren von in der Liste bestimmten Paketen aus dem empfangenen Datenstrom; und
einer Verarbeitungseinrichtung zum Verarbeiten der extrahierten Pakete zur Erzeugung eines Ausgabedatenstroms und zum selektiven Verringern der Anzahl von extrahierten Paketen in dem Ausgabedatenstrom, indem extrahierte Pakete mit höherer Priorität bevorzugt vor extrahierten Paketen mit niedrigerer Priorität in den Ausgabedatenstrom aufgenommen werden.

2. Vorrichtung nach Anspruch 1, wobei die Verarbeitungseinrichtung dazu eingerichtet ist, die Anzahl von extrahierten Paketen in dem Ausgabedatenstrom in dem Fall selektiv zu verringern, daß die Anzahl von aufzunehmenden extrahierten Paketen zu groß für die Datenhandhabungskapazität des Ausgabestroms wird.

3. Vorrichtung nach Anspruch 1 oder 2, wobei die Verarbeitungseinrichtung dazu eingerichtet ist, ausgeschlossene extrahierte Datenpakete selektiv wieder in den Ausgabedatenstrom einzufügen.

4. Vorrichtung nach einem der vorstehenden Ansprüche, wobei die Pakete einen Prioritätswert einer Vielzahl von Prioritätswerten aufweisen.

5. Vorrichtung nach einem der vorstehenden Ansprüche, wobei die Pakete einen Prioritätswert in dem Bereich von 0 bis 255 aufweisen.

6. Vorrichtung nach einem der vorstehenden Ansprüche, wobei der empfangene digitale Datenstrom ein MPEG-Datenstrom ist, wobei die Liste eine Liste von aus dem empfangenen Datenstrom auszuwählenden Paketidentifizierungen umfaßt.

7. Vorrichtung nach Anspruch 6, mit einer Einrichtung zum Speichern zumindest einer weiteren Liste von Paketidentifizierungen und einer Einrichtung zum Anwenden einer bestimmten Verarbeitungsoperation oder mehrerer bestimmter Verarbeitungsoperationen auf in der oder jeder weiteren Liste bestimmte Pakete vor dem Aufnehmen in den Ausgabedatenstrom.

8. Vorrichtung nach einem der vorstehenden Ansprüche, mit einer Einrichtung zum Einfügen weiterer Pakete in den Ausgabedatenstrom.

9. Vorrichtung nach einem der vorstehenden Ansprüche, wobei die empfangenen Pakete eine Vielzahl von Datenabschnitten umfassen und die Verarbeitungseinrichtung dazu ausgelegt ist, zumindest eines der folgenden auszuführen: Abschneiden eines Zellkopfs und/oder Zellfußes von einem empfangenen Datenabschnitt; Hinzufügen eines Zellkopfs und/oder Zellfußes zu einem empfangenen Datenabschnitt; Hinzufügen einer Angabe der Länge eines empfangenen Abschnitts; und Hinzufügen einer Rahmenüberprüfungssequenz.

10. Vorrichtung nach einem der vorstehenden Ansprüche, mit einer Einrichtung zum Überwachen des Empfangs von Paketen von Informationen.

11. Vorrichtung nach Anspruch 10, mit einer Einrichtung zum automatischen Einstellen der extrahierten Pakete in eine Warteschlange bis die Überwachungseinrichtung es angibt, daß alle erwarteten Pakete empfangen worden sind, oder bis zum Empfang einer Anweisung zum Stoppen von einer Anwendung.

12. Vorrichtung nach einem der vorstehenden Ansprüche, wobei die Verarbeitungseinrichtung dazu ausgelegt ist, einen zur Speicherung auf einem digitalen Videorecorder eingerichteten Ausgabedatenstrom zu erzeugen.

13. Vorrichtung nach einem der Ansprüche 1 bis 11, wobei die Verarbeitungseinrichtung dazu ausgelegt ist, einen zur Datenkommunikation mit einem Computer eingerichteten Ausgabedatenstrom zu erzeugen.

14. Vorrichtung nach einem der vorstehenden Ansprüche in der Form einer Vorrichtung in einem Empfänger/Decodierer, dazu ausgelegt, unter der Steuerung einer Anwendung über eine Vorrichtungsverwaltungseinrichtung zu arbeiten.

15. Vorrichtung nach Anspruch 14, mit einer Einrichtung zum Empfangen von Informationen von einer Anwendung zum Zusammenstellen der Liste von bestimmten Paketen.

16. Vorrichtung nach Anspruch 15, die dazu ausgelegt ist, in einer von zwei Betriebsarten zu arbeiten, wobei die Betriebsarten eine Leerlaufbetriebsart, in der kein Ausgabestrom erzeugt wird, und eine Laufbetriebsart, in der Daten durch die Vorrichtung hindurchgehen, umfassen.

17. Vorrichtung nach Anspruch 16, mit einer Einrichtung zum Empfangen von Befehlen von einer Anwendung zum Umschalten zwischen den Betriebsarten.

18. Vorrichtung nach Anspruch 16 oder Anspruch 17, mit einer in der Leerlaufbetriebsart zum Empfangen von Informationen zum Zusammenstellen der Liste in der Form einer Anfangsliste von in den Ausgabestrom zu kopierenden Paketidentifizierungen arbeitenden Einrichtung.

19. Vorrichtung nach Anspruch 16, 17 oder 18, mit einer in der Laufbetriebsart zum Empfangen einer Liste mit einer Liste von zu der derzeitigen Liste hinzuzufügenden oder aus ihr zu löschenden Paketidentifizierungen arbeitenden Einrichtung.

20. Vorrichtung nach einem der Ansprüche 14 bis 19, ferner mit einer Einrichtung, die zum Unterhalten einer weiteren Liste mit einer Liste von zu entscrambelnden Paketidentifizierungen ausgelegt ist.

21. Vorrichtung nach Anspruch 20, die dazu ausgelegt ist, Informationen zur Verwendung bei dem Entscrambeln von einer Anwendung zu empfangen, vorzugsweise als Teil einer Prozedur zur Einstellung der Anfangsliste mit einer Liste von zu entscrambelnden Paketidentifizierungen.

22. Vorrichtung nach einem der Ansprüche 14 bis 21, ferner mit einer Einrichtung zum Speichern einer Liste von durch eine Anwendung einzufügenden MPEG-Abschnitten.

23. Vorrichtung nach Anspruch 22, die dazu ausgelegt ist, Parameter zur Steuerung der Wiederholung des Abschnitts in dem Ausgabestrom von einer Anwendung zu empfangen, wobei die Vorrichtung zur Wiederholung des Abschnitts auf der Grundlage der Parameter ausgelegt ist.

24. Vorrichtung nach einem der Ansprüche 14 bis 23, ferner mit einer Einrichtung zum Zurückführen von die in dem Ausgabestrom enthaltenen derzeit ausgewählten Paketidentifizierungen betreffenden Informationen zu einer Anwendung.

25. Datenverarbeitungssystem, mit:
einer Laufzeitmaschineneinrichtung zum Ausführen zumindest einer Anwendung;
einer Einrichtung zum Empfangen eines ausgestrahlten digitalen Datenstroms;
einer Vorrichtung nach einem der Ansprüche 14 bis 24 zum Verarbeiten des empfangenen digitalen Datenstroms unter der Steuerung der oder jeder Anwendung; und
einer Einrichtung zum Zuführen des durch die Vorrichtung ausgegebenen Datenstroms zu einer Ausgabeschnittstelle.

26. Empfänger/Decodierer, mit einem Datenverarbeitungssystem nach Anspruch 25, wobei der Empfänger/Decodierer eine Einrichtung zum Empfangen des ausgestrahlten digitalen Datenstroms von einem Satellitenempfänger oder Kabel und der Schnittstelle umfaßt, wobei die Schnittstelle zur Verbindung mit einem digitalen Videorecorder oder einer digitalen Anzeigevorrichtung oder einem Computer zur Anzeige oder Speicherung zumindest eines Teils der empfangenen Daten oder zur Bereitstellung einer Kommunikationsverbindung mit dem Computer ausgelegt ist.

27. Empfänger/Decodierer nach Anspruch 26, wobei die Vorrichtung dazu ausgelegt ist, mit einem Vorrichtungstreiber zur Ausgabe des Ausgabedatenstroms zu der Schnittstelle zusammenzuarbeiten.

28. Empfänger/Decodierer nach Anspruch 27, wobei die Schnittstelle dem Standard IEEE 1394 oder einer Variante oder Modifikation davon entspricht.

29. Empfänger/Decodierer nach einem der Ansprüche 26 bis 28, der zur Verbindung mit einem digitalen Videorecorder ausgelegt ist, wobei der Empfänger/Decodierer eine zur Steuerung der Vorrichtung zur Auswahl von Teilen des empfangenen Datenstroms mit zwei oder mehr Fernsehprogrammen zur Ausgabe zu dem digitalen Videorecorder ausgelegte Anwendung und eine Einrichtung zum Hinzufügen von die Programme identifizierenden Informationen zu dem Ausgabedatenstrom umfaßt.

30. Verfahren zur Verarbeitung eines digitalen Datenstroms, mit:
Empfangen eines digitalen Datenstroms mit einer Vielzahl von Paketen von Informationen, wobei jedes Paket eine einem Paket oder mehreren Paketen gemeine Paketidentifizierung aufweist;
Speichern einer Liste von aus dem empfangenen digitalen Datenstrom auszuwählenden bestimmten Paketen, wobei die Liste eine jeder Paketidentifizierung zugewiesene Priorität angebende Prioritätsinformationen umfaßt;
Extrahieren von in der Liste bestimmten Paketen aus dem empfangenen Datenstrom;
Verarbeiten der extrahierten Pakete zur Erzeugung eines Ausgabedatenstroms; und
selektives Verringern der Anzahl von extrahierten Paketen in dem Ausgabedatenstrom, indem extrahierte Pakete mit höherer Priorität bevorzugt vor extrahierten Paketen mit niedrigerer Priorität in den Ausgabedatenstrom aufgenommen werden.

31. Verfahren nach Anspruch 30, wobei die Anzahl von extrahierten Paketen in dem Ausgabedatenstrom in dem Fall selektiv verringert wird, daß die Anzahl von aufzunehmenden extrahierten Paketen zu groß für die Datenhandhabungskapazität des Ausgabestroms wird.

32. Verfahren nach Anspruch 30 oder 31, ferner mit dem Schritt des selektiven Wiedereinfügens von ausgeschlossenen extrahierten Datenpaketen in den Ausgabedatenstrom.

33. Verfahren nach einem der Ansprüche 30 bis 32, wobei die Pakete einen Prioritätswert einer Vielzahl von Prioritätswerten aufweisen.

34. Verfahren nach einem der Ansprüche 30 bis 33, wobei die Pakete einen Prioritätswert in dem Bereich von 0 bis 255 aufweisen.

35. Verfahren nach einem der Ansprüche 30 bis 34, wobei der empfangene digitale Datenstrom ein MPEG-Datenstrom ist, wobei die Liste eine Liste von aus dem empfangenen Datenstrom auszuwählenden Paketidentifizierungen umfaßt.

36. Verfahren nach Anspruch 35, ferner mit den Schritten des Speicherns zumindest einer weiteren Liste von Paketidentifizierungen und Anwendens einer bestimmten Verarbeitungsoperation oder mehrerer bestimmter Verarbeitungsoperationen auf in der oder jeder weiteren Liste bestimmte Pakete vor dem Aufnehmen in den Ausgabedatenstrom.

37. Verfahren nach einem der Ansprüche 30 bis 36, ferner mit dem Schritt des Einfügens weiterer Pakete in den Ausgabedatenstrom.

38. Verfahren nach einem der Ansprüche 30 bis 37, wobei die empfangenen Pakete eine Vielzahl von Datenabschnitten umfassen und der Verarbeitungsschritt zumindest eines der folgenden umfaßt: Abschneiden eines Zellkopfs und/oder Zellfußes von einem empfangenen Datenabschnitt; Hinzufügen eines Zellkopfs und/oder Zellfußes zu einem empfangenen Datenabschnitt; Hinzufügen einer Angabe der Länge eines empfangenen Abschnitts; und Hinzufügen einer Rahmenüberprüfungssequenz.

39. Verfahren nach einem der Ansprüche 30 bis 38, ferner mit dem Schritt des Überwachens des Empfangs von Paketen von Informationen.

40. Verfahren nach Anspruch 39, ferner mit dem Schritt des automatischen Einstellens der extrahierten Pakete in eine Warteschlange bis alle erwarteten Pakete empfangen worden sind oder bis zum Empfang einer Anweisung zum Stoppen von einer Anwendung.

41. Verfahren nach einem der Ansprüche 30 bis 40, das einen zur Speicherung auf einem digitalen Videorecorder eingerichteten Ausgabedatenstrom erzeugt.

42. Verfahren nach einem der Ansprüche 30 bis 40, das einen zur Datenkommunikation mit einem Computer eingerichteten Ausgabedatenstrom erzeugt.

## Revendications

1. Appareil pour traiter un flot de données numériques comprenant :
un moyen pour recevoir un flot de données numériques comprenant une pluralité de paquets d'informations, chaque paquet ayant un identificateur de paquet commun à un ou plusieurs paquets ;
un moyen pour stocker une liste de paquets spécifiés à sélectionner à partir du flot de données numériques reçu, ladite liste comprenant des informations de priorité indiquant une priorité attribuée à chaque identificateur de paquet ;
un moyen pour extraire des paquets spécifiés dans ladite liste à partir du flot de données reçu ; et
un moyen de traitement pour traiter les paquets extraits pour produire un flot de données de sortie, et pour réduire de manière sélective le nombre de paquets extraits dans le flot de données de sortie en incluant des paquets extraits ayant une priorité supérieure dans le flot de données de sortie de préférence aux paquets extraits ayant une priorité inférieure.

2. Appareil selon la revendication 1, dans lequel ledit moyen de traitement est conçu pour réduire de manière sélective le nombre de paquets extraits dans le flot de données de sortie dans le cas où le nombre de paquets extraits à inclure devient trop grand pour la capacité de gestion de données du flot de sortie.

3. Appareil selon la revendication 1 ou 2, dans lequel ledit moyen de traitement est conçu pour réinsérer de manière sélective des paquets de données extraits exclus dans le flot de données de sortie.

4. Appareil selon l'une quelconque des revendications précédentes, dans lequel les paquets ont l'une d'une multiplicité de valeurs de priorité.

5. Appareil selon l'une quelconque des revendications précédentes, dans lequel les paquets ont une valeur de priorité dans la plage de 0 à 255.

6. Appareil selon l'une quelconque des revendications précédentes, dans lequel le flot de données numériques reçu est un flot de données MPEG, la liste comprenant une liste d'identificateurs de paquets à sélectionner à partir du flot de données reçu.

7. Appareil selon la revendication 6, comprenant un moyen pour stocker au moins une liste supplémentaire d'identificateurs de paquets et un moyen pour appliquer une ou plusieurs opérations de traitement spécifiées à des paquets spécifiés dans la ou dans chaque liste supplémentaire avant inclusion dans le flot de données de sortie.

8. Appareil selon l'une quelconque des revendications précédentes, comprenant un moyen pour insérer des paquets supplémentaires dans le flot de données de sortie.

9. Appareil selon l'une quelconque des revendications précédentes, dans lequel les paquets reçus comprennent une pluralité de sections de données et le moyen de traitement est conçu pour effectuer au moins une des opérations suivantes : couper un en-tête et/ou un bas de page d'une section de données reçue ; ajouter un en-tête et/ou un bas de page à une section de données reçue ; ajouter une indication de la longueur d'une section reçue ; et ajouter une séquence de vérification de trame.

10. Appareil selon l'une quelconque des revendications précédentes, comprenant un moyen pour contrôler la réception de paquets d'informations.

11. Appareil selon la revendication 10, ayant un moyen pour mettre automatiquement en file d'attente les paquets extraits jusqu'à ce que ledit mémoire de contrôle indique que tous les paquets attendus ont été reçus ou jusqu'à la réception d'une instruction d'arrêt en provenance d'une application.

12. Appareil selon l'une quelconque des revendications précédentes, dans lequel le moyen de traitement est conçu pour produire un flot de données de sortie adapté au stockage sur un magnétoscope numérique.

13. Appareil selon l'une quelconque des revendications 1 à 11, dans lequel le moyen de traitement est conçu pour produire un flot de données de sortie adapté à la communication de données avec un ordinateur.

14. Appareil selon l'une quelconque des revendications précédentes, sous la forme d'un dispositif dans un récepteur / décodeur, conçu pour fonctionner sous la commande d'une application, via un gestionnaire de dispositif.

15. Appareil selon la revendication 14, comprenant un moyen pour recevoir en provenance d'une application des informations pour la compilation de ladite liste de paquets spécifiés.

16. Appareil selon la revendication 15, conçu pour fonctionner dans l'un de deux modes, les modes comprenant un mode inoccupé dans lequel aucun flot de sortie n'est produit et un mode de fonctionnement dans lequel des données passent par le dispositif.

17. Appareil selon la revendication 16, comprenant un moyen pour recevoir des commandes en provenance d'une application pour commuter entre lesdits modes.

18. Appareil selon la revendication 16 ou la revendication 17, comprenant un moyen opérationnel dans ledit mode inoccupé pour recevoir des informations pour la compilation de ladite liste sous la forme d'une liste initiale d'identificateurs de paquets à copier dans le flot de sortie.

19. Appareil selon la revendication 16, 17 ou 18, comprenant un moyen opérationnel dans ledit mode de fonctionnement pour recevoir une liste comprenant une liste d'identificateurs de paquets à ajouter à ou à supprimer de la liste courante.

20. Appareil selon l'une quelconque des revendications 14 à 19, comprenant de plus un moyen conçu pour maintenir une liste supplémentaire comprenant une liste d'identificateurs de paquets à décrypter.

21. Appareil selon la revendication 20, conçu pour recevoir des informations à utiliser dans le décryptage en provenance d'une application, de préférence comme une partie d'une procédure pour fixer la liste initiale comprenant une liste d'identificateurs de paquets à décrypter.

22. Appareil selon l'une quelconque des revendications 14 à 21, comprenant de plus un moyen pour stocker une liste de sections MPEG à insérer par une application.

23. Appareil selon la revendication 22, conçu pour recevoir des paramètres en provenance d'une application pour commander la répétition de la section dans le flot de sortie, le dispositif étant conçu pour répéter la section sur la base des paramètres.

24. Appareil selon l'une quelconque des revendications 14 à 23, comprenant de plus un moyen pour renvoyer à une application des informations concernant les identificateurs de paquets actuellement sélectionnés inclus dans le flot de sortie.

25. Système de traitement de données comprenant :
un moyen formant moteur d'exécution pour exécuter au moins une application ;
un moyen pour recevoir un flot de données numériques diffusé ;
un appareil selon l'une quelconque des revendications 14 à 24 pour traiter le flot de données numériques reçu sous la commande de l'application ou de chaque application ; et
un moyen pour fournir le flot de données sorti par l'appareil à une interface de sortie.

26. Récepteur / décodeur comprenant un système de traitement de données selon la revendication 25, le récepteur / décodeur comprenant un moyen pour recevoir le flot de données numériques diffusé en provenance d'un récepteur satellite ou d'un câble et ladite interface, l'interface étant conçue pour se connecter à un magnétoscope numérique ou à un dispositif d'affichage numérique ou à un ordinateur pour l'affichage ou le stockage d'au moins une partie des données reçues ou pour définir une liaison de communication avec l'ordinateur.

27. Récepteur / décodeur selon la revendication 26, dans lequel l'appareil est conçu pour coopérer avec un gestionnaire de dispositif pour sortir le flot de données de sortie vers l'interface.

28. Récepteur / décodeur selon la revendication 27, dans lequel l'interface se conforme à la norme IEEE 1394 ou à une variante ou à une modification de cette dernière.

29. Récepteur / décodeur selon l'une quelconque des revendications 26 à 28, conçu pour se connecter à un magnétoscope numérique, le récepteur / décodeur comprenant une application conçue pour commander l'appareil pour sélectionner des parties du flot de données reçu comprenant deux ou plusieurs programmes de télévision pour la sortie vers le magnétoscope numérique et un moyen pour ajouter des informations au flot de données de sortie identifiant les programmes.

30. Procédé de traitement d'un flot de données numériques comprenant :
la réception d'un flot de données numériques comprenant une pluralité de paquets d'informations, chaque paquet ayant un identificateur de paquet commun à un ou plusieurs paquets ;
le stockage d'une liste de paquets spécifiés à sélectionner à partir du flot de données numériques reçu, ladite liste comprenant des informations de priorité indiquant une priorité attribuée à chaque identificateur de paquet ;
l'extraction de paquets spécifiés dans ladite liste à partir du flot de données reçu ;
le traitement des paquets extraits pour produire un flot de données de sortie ; et
la réduction sélective du nombre de paquets extraits dans le flot de données de sortie en incluant des paquets extraits ayant une priorité supérieure dans le flot de données de sortie de préférence à des paquets extraits ayant une priorité inférieure.

31. Procédé selon la revendication 30, dans lequel le nombre de paquets extraits dans le flot de données de sortie est réduit de manière sélective dans le cas où le nombre de paquets extraits à inclure devient trop grand pour la capacité de gestion de données du flot de sortie.

32. Procédé selon la revendication 30 ou 31, comprenant de plus l'étape consistant à réinsérer de manière sélective des paquets de données extraits exclus dans le flot de données de sortie.

33. Procédé selon l'une quelconque des revendications 30 à 32, dans lequel les paquets ont l'une d'une multiplicité de valeurs de priorité.

34. Procédé selon l'une quelconque des revendications 30 à 33, dans lequel les paquets ont une valeur de priorité dans la plage de 0 à 255.

35. Procédé selon l'une quelconque des revendications 30 à 34, dans lequel le flot de données numériques reçu est un flot de données MPEG, la liste comprenant une liste d'identificateurs de paquets à sélectionner à partir du flot de données reçu.

36. Procédé selon la revendication 35, comprenant de plus les étapes de stockage d'au moins une liste supplémentaire d'identificateurs de paquets, et d'application d'une ou plusieurs opérations de traitement spécifiées à des paquets spécifiés dans la ou chaque liste supplémentaire avant inclusion dans le flot de données de sortie.

37. Procédé selon l'une quelconque des revendications 30 à 36, comprenant de plus l'étape consistant à insérer des paquets supplémentaires dans le flot de données de sortie.

38. Procédé selon l'une quelconque des revendications 30 à 37, dans lequel les paquets reçus comprennent une pluralité de sections de données et l'étape de traitement comprend au moins l'une des opérations suivantes : couper un en-tête et/ou un bas de page d'une section de données reçue ; ajouter un en-tête et/ou un bas de page à une section de données reçue ; ajouter une indication de la longueur d'une section reçue ; et ajouter une séquence de vérification de trame.

39. Procédé selon l'une quelconque des revendications 30 à 38, comprenant de plus l'étape consistant à contrôler la réception des paquets d'informations.

40. Procédé selon la revendication 39, comprenant de plus l'étape consistant à mettre automatiquement en file d'attente les paquets extraits jusqu'à ce que tous les paquets attendus aient été reçus ou jusqu'à la réception d'une instruction d'arrêt en provenance d'une application.

41. Procédé selon l'une quelconque des revendications 30 à 40, produisant un flot de données de sortie conçu pour le stockage sur un magnétoscope numérique.

42. Procédé selon l'une quelconque des revendications 30 à 40, produisant un flot de données de sortie conçu pour la communication de données avec un ordinateur.
